# EUROPEAN PATENT SPECIFICATION

(11) **EP 3 986 027 B1**
(45) Date of publication and mention of the grant of the patent: **19.02.2025**
(21) Application number: 20825559.6
(22) Date of filing: 03.06.2020
(51) Int. Cl.: H04W 24/04, H04L 41/0659, H04L 41/40, H04L 45/00, H04L 41/0668, H04W 28/08

(54) **COMMUNICATION METHOD AND APPARATUS, ENTITY AND STORAGE MEDIUM**
KOMMUNIKATIONSVERFAHREN UND -VORRICHTUNG, ENTITÄT UND SPEICHERMEDIUM
PROCÉDÉ ET APPAREIL DE COMMUNICATION, ENTITÉ ET SUPPORT D'INFORMATIONS

(30) Priority: 17.06.2019 CN 201910523153
(43) Date of publication of application: 20.04.2022
(73) Proprietor: Tencent Technology (Shenzhen) Company Limited, Shenzhen, Guangdong, 518057 (CN)
(72) Inventor: WANG, Tao, Shenzhen, Guangdong 518057 (CN)
(74) Representative: AWA Sweden AB
(86) International application number: PCT/CN2020/094140
(87) International publication number: WO 2020/253531

(56) References cited:
- CN-A- 103 873 131
- CN-A- 107 623 589
- CN-A- 110 234 140
- "3rd Generation Partnership Project; Technical Specification Group Services and System Aspects; System Architecture for the 5G System; Stage 2 (Release 16)", vol. SA WG2, 11 June 2019 (2019-06-11), XP051756422, Retrieved from the Internet <URL:http://www.3gpp.org/ftp/tsg_sa/WG2_Arch/Latest_SA2_Specs/DRAFT_INTERIM/Archive/23501-g10_CRs_Implemented_R2.zip> [retrieved on 20190611]
- "3rd Generation Partnership Project; Technical Specification Group Services and System Aspects; Procedures for the 5G System; Stage 2 (Release 16)", vol. SA WG2, 1 April 2019 (2019-04-01), XP051751807, Retrieved from the Internet <URL:http://www.3gpp.org/ftp/tsg%5Fsa/WG2%5FArch/Latest%5FSA2%5FSpecs/DRAFT%5FINTERIM/Archive/23502%2Dg02%5FMCC%5FCorrections%2Ezip> [retrieved on 20190401]
- "3rd Generation Partnership Project; Technical Specification Group Core Network and Terminals; Study on IETF QUIC Transport for 5GC Service Based Interfaces; (Release 16)", 3GPP STANDARD; TECHNICAL REPORT; 3GPP TR 29.893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.1.0, 30 April 2019 (2019-04-30), pages 1 - 38, XP051753786
- TENCENT: "Handling communication with no available SCP", vol. SA WG2, no. Sapporo, Japan; 20190624 - 20190628, 18 June 2019 (2019-06-18), XP051752117, Retrieved from the Internet <URL:http://www.3gpp.org/ftp/tsg%5Fsa/WG2%5FArch/TSGS2%5F134%5FSapporo/Docs/S2%2D1907144%2Ezip> [retrieved on 20190618]
- TENCENT: "Handling Communication with No Available SCP", SA WG2 MEETING #134 S2-1907144, 18 June 2019 (2019-06-18), XP051752117
- TENCENT: "Handling Communication with No Available SCP", SA WG2 MEETING #135 S2-1909128, 4 October 2019 (2019-10-04), XP051795248

## Description

This application claims priority to Chinese Patent Application No. 201910523153.7, entitled "COMMUNICATION METHOD AND APPARATUS, ENTITY AND STORAGE MEDIUM" filed with the China National Intellectual Property Administration on June 17, 2019.

### FIELD

This application relates to the technical field of communications, and in particular, to a communication technology between network function entities.

### BACKGROUND

Starting from Release 15 (R15) of the 5G communication standard formulated by the 3rd Generation Partnership Project (3GPP), a network function (NF) network element and a network function service (NF service) module are introduced into a communication network. The NF service module may be a module located on the NF network element, or may be a module from a virtualized network.

In R15 standard, an NF network element/NF service module serving as a consumer directly communicates with an NF network element/NF service module serving as a producer. There is a relative relationship between the producer and the consumer. If a party A provides a service to a party B, the party A is a producer, and the party B is a consumer. An indirect communication technology is introduced in R16. That is, the NF network element/NF service module serving as the consumer needs to communicate with the NF network element/NF service module serving as the producer via a service communication proxy (SCP) network element.

In the R16 standard, an SCP network element used by the NF network element/NF service module serving as the consumer is statically configured. If the statically configured SCP network element is invalid, indirect communication of the NF network element/NF service module serving as the consumer is invalid.

In the prior document "3^{rd} Generation Partnership Project; Technical Specification Group Services and System Aspects; System Architecture for the 5G System; Stage 2(Release 16)" defines the stage 2 system architecture for the 5G system. The 5G system provided data connectivity and services. The specification covers both roaming and non-roaming scenarios in all aspects, including interworking between 5GS and EPS, mobility within 5GS, QoS, policy control and charging, authentication and in general 5G system wide features, e.g. SMS, location services, emergency services.

### SUMMARY

A communication method is provided according to embodiments of this application, to ensure that a first network function entity and a second network function entity can continually perform service communication in a case that an SCP network element used by the first network function entity to communicate with the second network function entity is invalid, thereby ensuring the service continuity and the reliability and availability of a system. An apparatus, an entity, and a storage medium are further provided accordingly according to the embodiments of this application.

According to a first aspect of this application, a communication method is provided, including:
communicating, by a first network function entity, indirectly with a second network function entity via a first service communication proxy (SCP) network element;
in a case that the first network function entity determines that the first SCP network element is invalid, detecting, by the first network function entity, a second SCP network element or returning, by the first network function entity, to directly communicate with the second network function entity;
in a case that the first network function entity determines that the second SCP network element is valid, switching, by the first network function entity, from the first SCP network element to the second SCP network element, to indirectly communicate with the second network function entity via the second SCP network element; and
in a case that the first network function entity determines that the second SCP network element is invalid, returning, by the first network function entity, to directly communicate with the second network function entity,
characterized in that
the communication method further includes:
transmitting, by the first network function entity to a control function entity or a third network function entity, a first notification message indicating that the first SCP network element or the second SCP network element is invalid.

According to a second aspect of this application, a network function entity is provided, including: a communication module, a detection module, a returning module, and a switching module. The communication module is configured to indirectly communicate with a second network function entity by using a first service communication proxy (SCP) network element. The detection module is configured to detect a second SCP network element in a case that it is determined that the first SCP network element is invalid. The returning module is configured to return to directly communicate with the second network function entity in a case that it is determined that the first SCP network element is invalid. The switching module is configured to switch from the first SCP network element to the second SCP network element in a case that the detection module detects that the second SCP network element is valid. The communication module is further configured to indirectly communicate with the second network function entity via the second SCP network element that is switched to by the switching module. The returning module is further configured to return to directly communicate with the second network function entity in a case that the detection module detects that the second SCP network element is invalid. The network function entity further includes a transmission module, configured to transmit, to the control function entity or a third network function entity, a first notification message indicating that the first SCP network element or the second SCP network element is invalid.

With reference to the second aspect, in a first possible implementation, the network function entity further includes a first selection module. The first selection module is configured to select a third SCP network element, and select, in a case that the third SCP network element is invalid during selecting the second network function entity for the first network function entity, the first SCP network element to establish a communication connection between the first network function entity and the second network function entity.

With reference to the second aspect, in the second possible implementation, the detection module may be further configured to: select N valid SCP network elements from configured M valid SCP network elements as the second SCP network elements, where M is an integer greater than 0, and N is an integer greater than 0 and less than or equal to M.

With reference to the second aspect, in the third possible implementation, the detection module may include: a first transmission unit, and a first reception unit. The first transmission unit is configured to transmit a first query request to a control function entity. The first reception unit is configured to receive a first query response transmitted by the control function entity, the first query response includes information about M valid SCP network elements, M is an integer greater than 0. The first selection module is further configured to select N valid SCP network elements from the M valid SCP network elements as the second SCP network elements, N is an integer greater than 0 and less than or equal to M.

With reference to the second aspect, in the fourth possible implementation, the detection module may include: a second transmission unit and a second reception unit. The second transmission unit is configured to transmit a second query request to a control function entity. The second reception unit is configured to receive a second query response transmitted by the control function entity, the second query response is used for indicating absence of a valid SCP network element, the absence of a valid SCP network element represents that the second SCP network element is invalid.

With reference to the second or the third possible implementation of the second aspect, in a fifth possible implementation, in a case that N is greater than 1, the network function entity further includes a service allocation module. The service allocation module is configured to perform service allocation among the N second SCP network elements according to load capacity information of each of the N second SCP network elements.

With reference to the fifth possible implementation of the second aspect, in a sixth possible implementation, the service allocation module is further configured to adjust, in a case that Q second SCP network elements in the N second SCP network elements are invalid, the service allocation according to load capacity information of each of (N-Q) second SCP network elements, Q is an integer greater than 0 and less than N.

With reference to the second or the third possible implementation of the second aspect, in a seventh possible implementation, the first selection module is configured to select a second SCP network element from the N second SCP network elements to provide a service for a connected terminal.

With reference to the second aspect and any one of the first to the fourth possible implementations of the second aspect, in a ninth possible implementation, the network function entity further includes: a first reception module. The first reception module is configured to receive, in a case that the first network function entity returns to directly communicate with the second network entity, a second notification message indicating that the first SCP network element is restored to be valid or the second SCP network element is restored to be valid. The switching module is further configured to switch, in response to the second notification message, to indirectly communicate with the second network function entity via the first SCP network element or the second SCP network element.

With reference to the second aspect and any one of the first to the fourth possible implementations of the second aspect, in the tenth possible implementation, the network function entity further includes: a second reception module and an addition module. The second reception module is configured to receive, in a case that the first network function entity communicates with the second network function entity via the second SCP network element, a third notification message indicating that the first SCP network element is restored to be valid. The addition module is configured to add the first SCP network element to a resource pool of candidate valid SCP network elements according to the third notification message.

According to a third aspect of this application, a network function entity is provided, including: a communication interface, a processor, and a memory. The memory is configured to store computer executable instructions. The communication interface is configured to, when the network function entity operates, perform operations performed by the communication module according to the second aspect or any possible implementation of the second aspect. The processor is configured to execute the computer executable instructions stored on the memory, to perform operations performed by the switching module according to the second aspect or any possible implementation of the second aspect.

According to a fourth aspect of this application, a computer-readable storage medium is provided, which stores instructions. The instructions, when run on a computer, cause the computer to perform the method according to the first aspect.

According to another aspect of this application, a computer program product including instructions is provided. The instructions, when run on a computer, cause the computer to perform the method according to the first aspect.

In the embodiments of this application, in a case that the SCP network element used by the first network function entity to communicate with the second network function entity is invalid, another available SCP network element may be used for indirect communication or the first network function entity may return to directly communicate with the second network function entity. In this way, it can be ensured that the first network function entity can continually perform service communication with the second network function entity, thereby ensuring the service continuity and the reliability and availability of a system.

### BRIEF DESCRIPTION OF THE DRAWINGS

FIG. 1 is a schematic diagram of a network architecture of a communication system according to an embodiment of this application.
FIG. 2 is a schematic diagram of another network architecture of a communication system according to an embodiment of this application.
FIG. 3 is a schematic diagram of another network architecture of a communication system according to an embodiment of this application.
FIG. 4 is a schematic diagram of another network architecture of a communication system according to an embodiment of this application.
FIG. 5 is a schematic diagram of a communication method according to an embodiment of this application.
FIG. 6 is a schematic diagram of a communication method according to another embodiment of this application.
FIG. 7 is a schematic diagram of a communication method according to another embodiment of this application.
FIG. 8 is a schematic diagram of a communication method according to another embodiment of this application.
FIG. 9 is a schematic diagram of a communication apparatus according to an embodiment of this application.
FIG. 10 is a schematic diagram of a communication apparatus according to another embodiment of this application.
FIG. 11 is a schematic diagram of a communication device according to an embodiment of this application.

### DESCRIPTION OF EMBODIMENTS

The embodiments of this application are described in the following with reference to the drawings. It is apparent that the described embodiments are merely some rather than all of the embodiments of this application. A person of ordinary skill in the art may learn that as the technology evolves and a new scenario emerges, the technical solutions provided in the embodiments of this application are also applicable to a similar technical problem.

In this specification, claims, and the foregoing drawings of this application, the terms "first", "second", and so on are intended to distinguish between similar objects rather than indicating a specific order or sequence. It is to be understood that the terms used in such a way are interchangeable in proper cases, so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

A communication method is provided according to embodiments of this application, to ensure that a first network function entity and a second network function entity can continually perform service communication in a case that an SCP network element used by the first network function entity to communicate with the second network function entity is invalid, thereby ensuring the service continuity and the reliability and availability of a system. An apparatus, an entity, and a storage medium are further provided accordingly according to the embodiments of this application. Detailed descriptions are provided below.

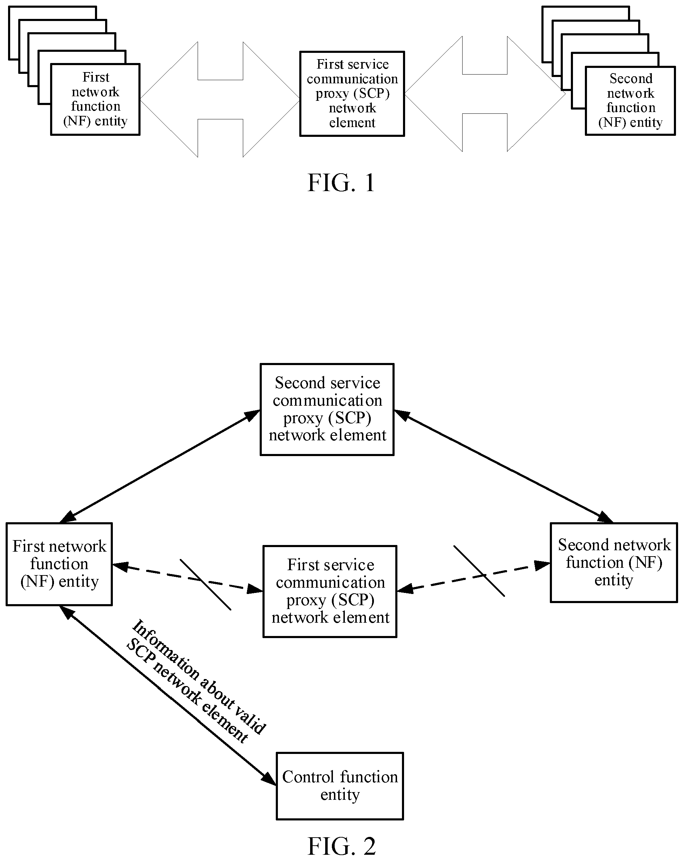

FIG. 1 is a schematic diagram of a network architecture of a communication system according to an embodiment of this application.

As shown in FIG. 1, the communication system provided in this embodiment of this application includes a first network function entity, a service communication proxy (SCP) network element, and a second network function entity. The SCP network element may be a first SCP network element. That is, the first network function entity indirectly communicates with the second network function entity via the first SCP network element.

The first network function entity and the second network function entity may be network elements or modules that perform particular functions in an operator network, or may be NF network elements, or may be NF service modules.

When the first network function entity or the second network function entity is an NF network element, the first network function entity or the second network function entity may include an access and mobility management function (AMF) network element, a session management function (SMF) network element, a user plane function (UPF) network element, a policy control function (PCF) network element, a unified data management (UDM) network element, a unified data repository (UDR) network element, an authentication server function (AUSF) network element, a network slice selection function (NSSF) network element, a network data analytics function (NWDAF) network element, or a network repository function (NRF) network element.

When the first network function entity or the second network function entity is an NF service module, the first network function entity or the second network function entity may be a function module providing services to the foregoing network elements, for example, an AMF service module, an SMF service module, a UPF service module, a PCF service module, a UDM service module, a UDR service module, an AUSF service module, an NSSF service module, an NWDAF service module, or an NRF service module.

The SCP network element may be a device that acts as proxy to implement functions of the foregoing NF network element or NF service module.

In this embodiment of this application, there may be one or more first network function entities, and there may also be one or more second network function entities. The first network function entity may indirectly communicate with the second network function entity via multiple SCP network elements.

One of the first network function entity and the second network function entity may serve as a producer, and the other one may serve as a consumer. In this embodiment of this application, the first network function entity serves as a consumer, and the second network function entity serve as a producer. There may be various entity combination ways for the first network function entity and the second network function entity. For example, if an AMF network element serves as the first network function entity, an SMF network element may serve as the second network function entity. If a source AMF network element serve as the second network function entity, a target AMF network element may serve as the first network function entity. If a source SMF network element serves as the second network function entity, a target SMF network element may serve as the first network function entity. If a UPF network element serves as the second network function entity, an SMF network element may serve as the first network function entity. If a PCF network element serves as the second network function entity, an AMF network element may serve as the first network function entity, or an SMF network element may serve as the first network function entity. Further, a producer-consumer relationship between entities is not limited to the types listed herein. As long as two entities can communicate with each other, a producer-consumer relationship between the first network function entity and the second network function entity may be established.

Both the producer and the consumer are described above at a network element level. In fact, there may be further corresponding service modules under each network-element level. For example, an AMF network element may include one or more AMF service modules, which may be marked as AMF service 1/2/3/..., and an SMF network element may include one or more SMF service modules, which may be marked as SMF service 1/2/3/.... If the SMF service 1/2/3/... serves as the second network function entity, the AMF service 1 may serve as the first network function entity. Further, the AMF service 2 may also serve as the first network function entity. Such a manner is merely described as an example in this embodiment. In fact, for any other relationship between service modules of network elements, reference may be made to the foregoing producer-consumer relationship between the network elements.

The foregoing producer-consumer relationship is relative and is not fixed, and may be determined according to different use scenarios. This is not limited in this embodiment of this application.

Based on the embodiment with reference to FIG. 1, in another embodiment of a communication system in the embodiments of this application, as shown in FIG. 2, which is a schematic diagram of a network architecture of a communication system according to another embodiment of this application, the communication system may further include a control function entity. The control function entity is configured to provide information about valid SCP network elements for the first network function entity in a case that the first SCP network element used by the first network function entity to indirectly communicate with the second network function entity is invalid. In this way, the first network function entity may select a second SCP network element from the valid SCP network elements based on the information about the valid SCP network elements, and further indirectly communicate with the second network function entity via the second SCP network element.

The control function entity may be a network element for recording whether an SCP network element is valid, for example, an NRF network element or a domain name system (DNS) network element. The control function entity may alternatively be a service module for recording whether an SCP network element is valid, for example, an NRF service module or a DNS service module.

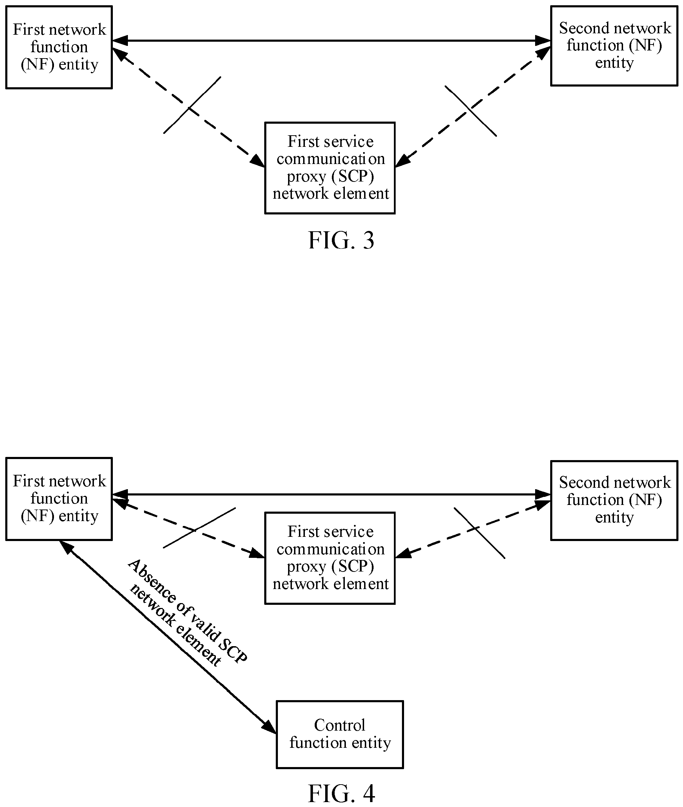

In another possible implementation, based on the communication system shown in FIG. 1, in another embodiment of the communication system provided in the embodiments of this application, as shown in FIG. 3, which is a schematic diagram of a network architecture of a communication system according to another embodiment of this application, in a case that the first SCP network element is invalid, the communication system may not detect, by using a control function entity, whether another valid SCP network element exists. Instead, the first network function entity directly communicates with the second network function entity.

In another possible implementation, in another embodiment of the communication system provided by the embodiments of this application, as shown in FIG. 4, which is a schematic diagram of a network architecture of a communication system according to another embodiment of this application, in a case that the first SCP network element is invalid, if the first network function entity does not find a valid SCP network element by using a control function entity, the first network function entity may directly communicate with the second network function entity.

In the foregoing implementations, in a case that the first SCP network element is invalid, both searching for another valid SCP network element to establish indirect communication between the first network function entity and the second network function entity by using the valid second SCP network element and establishing, by the first network function entity, direct communication with the second network function entity can ensure that the first network function entity and the second network function entity can continually perform service communication in a case that the SCP network element used by the first network function entity to communicate with the second network function entity is invalid, thereby ensuring the service continuity and the reliability and availability of a system.

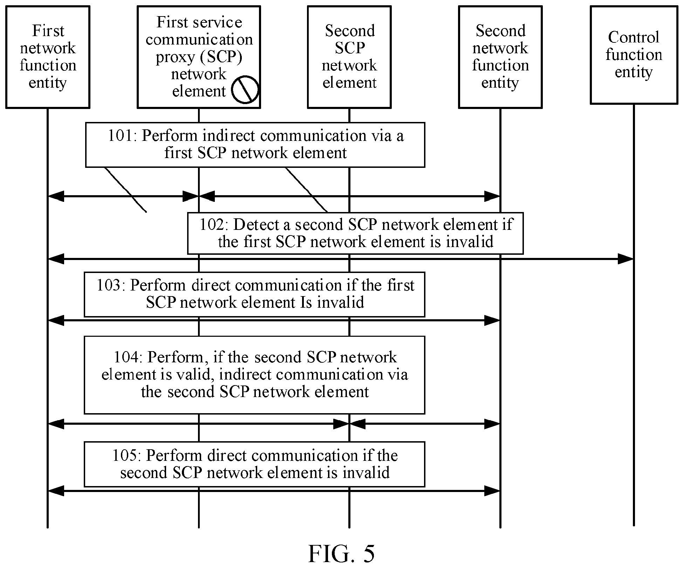

Based on the foregoing described network architectures of the communication system, an embodiment of a communication method in the embodiments of this application is described below with reference to FIG. 5.

As shown in FIG. 5, an embodiment of the communication method provided by the embodiments of this application may include the following steps 101 to 105.

In step 101, a first network function entity indirectly communicates with a second network function entity via a first SCP network element.

In step 102, the first network function entity detects a second SCP network element in a case that the first network function entity determines that the first SCP network element is invalid.

It is to be noted that the first network function entity may determine that the first SCP network element is invalid in a way that if the first network function entity does not receive a response from the first SCP network element after requesting the first SCP network element to select a second network function entity for the first network function entity, the first network function entity determines that the first SCP network element is invalid.

A process of detecting the second SCP network element by the first network function entity may include two processes, namely, a finding process and a selection process.

The finding process may include that the first network function entity finds the second SCP network element by using a control function entity, for example, the control function entity feeds back a information list about valid SCP network elements including a second SCP network element to the first network function entity.

The selection process may include that the first network function entity selects the second SCP network element from the information list about valid SCP network elements fed back by the control function entity.

In step 103, the first network function entity returns to directly communicate with the second network function entity.

Step 102 and step 103 are not performed at a same process, that is, if step 102 is performed, step 103 is not performed; if step 103 is performed, step 102 is not performed. That is, in a case that the first SCP network element is invalid, the first network function entity may detect another SCP network element (for example, the second SCP network element) to ensure that the first network function entity can continually perform service communication with the second network function entity. Alternatively, the first network function entity may return to directly communicate with the second network function entity to ensure that the first network function entity can continually perform service communication with the second network function entity. In a way that the first network function entity detects another SCP network element to ensure that the first network function entity can continually perform service communication with the second network function entity, because the detected another SCP network element may be valid or invalid, different communication manners may be determined depending on whether the second SCP network element is valid. Therefore, whether the second SCP network element is valid needs to be determined. A determining manner is the same as the foregoing manner of determining whether the first SCP network element is valid. Details are not described herein again.

In step 104, the first network function entity switches from the first SCP network element to the second SCP network element in a case that the second SCP network element is valid, and indirectly communicates with the second network function entity via the second SCP network element.

In step 105, the first network function entity returns to directly communicate with the second network function entity in a case that the second SCP network element is invalid. In the embodiments of this application, in a case that the SCP network element used by the first network function entity for communication with the second network function entity is invalid, another available SCP network element may be switched to or the first network function entity may return to directly communicate with the second network function entity. In this way, it can be ensured that the first network function entity can continually perform service communication with the second network function entity, thereby ensuring the service continuity and the reliability and availability of a system.

In a possible implementation, the first SCP network element may be not the first SCP network element selected by the first network function entity, and may be switched to from another SCP network element. Therefore, before step 101, the first network function entity may select a third SCP network element. In a case that the third SCP network element is invalid during selecting the second network function entity for the first network function entity, the first network function entity selects the first SCP network element to establish a communication connection between the first network function entity and the second network function entity.

That is, if the first network function entity does not receive a response from the third SCP network element after requesting the third SCP network element to select the second network function entity for the first network function entity, the first network function entity may determine that the third SCP network element is invalid during selecting the second network function entity. In this case, the first network function entity may select the first SCP network element from valid SCP network elements and select the second network function entity for the first network function entity by using the first SCP network element.

There may be various implementations of detecting the second SCP network element by the first network function entity in step 102. In an implementation, the first network function entity selects N valid SCP network elements from configured M valid SCP network elements as the second SCP network elements, M is an integer and is greater than 0, and N is an integer and N is greater than 0 and less than or equal to M.

In this case, the detection is implemented through a statical configuration. Multiple valid SCP network elements are configured for the first network function entity during initial configuration. In a case that one SCP network element is invalid, a second SCP network element may be selected from the remaining valid SCP network elements. In this scenario, the M valid SCP network elements may be understood as the remaining valid SCP network elements.

In another implementation, the first network function entity transmits a first query request to the control function entity. On reception of the first query request, the control function entity may transmit a first query response to the first network function entity in response to the first query request. Because the first query response includes information about the M valid SCP network elements, on reception of the first query response, the first network function entity may select the N valid SCP network elements from the M valid SCP network elements as the second SCP network elements. M is an integer and is greater than 0, and N is an integer and N is greater than 0 and less than or equal to M.

In another implementation, the first network function entity transmits a second query request to the control function entity. On reception of the second query request, the control function entity may transmit a second query response to the first network function entity in response to the second query request. In a case that the second query response indicates absence of a valid SCP network element, it indicates that the second SCP network element is invalid.

In this embodiment, the first query request and the second query request have the same function for querying the control function entity for whether a valid second SCP network element exists.

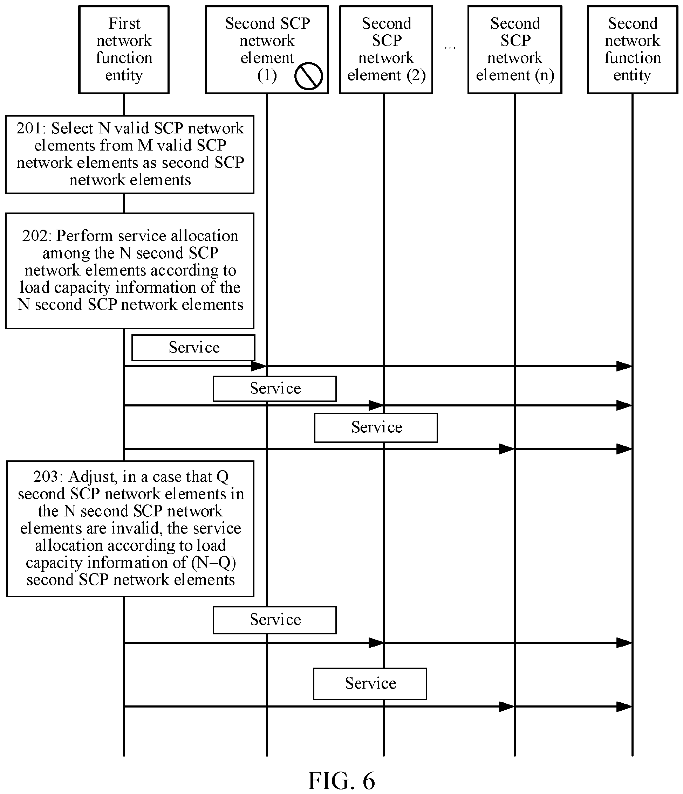

In a case that the first network function entity detects M valid SCP network elements, referring to FIG. 6, the communication method according to another embodiment of this application may include the following steps 201 to 203.

In step 201, the first network function entity selects N valid SCP network elements from the M valid SCP network elements as the second SCP network elements, where N is an integer greater than 0 and less than or equal to M.

The first network function entity may select one second SCP network element, or may select two or more second SCP network elements. If two or more second SCP network elements are selected, service allocation may be performed in step 202 according to different service capabilities of the second SCP network elements.

In step 202, the first network function entity performs service allocation among the N second SCP network elements according to load capacity information of each of the N second SCP network elements.

If the first network function entity determines that there are multiple available second SCP network elements, service may be allocated according to load capacity information of the second SCP network elements in a load balance manner. The load capacity information may be represented by a weight factor. That is, service may be allocated based on weight factors of the second SCP network elements.

In a possible implementation, service may be allocated based on a proportion of the weight factor of each second SCP network element in a sum of the weight factors of all the second SCP network elements.

For example, if the second SCP network elements include SCP-1, SCP-2, and SCP-3, a weight factor of the SCP-1 is 1.0, a weight factor of the SCP-2 is 0.5, and a weight factor of the SCP-3 is 0.6, the first network function entity may transmit 1.0/(1.0+0.5+0.6)=47.6% of service request to the SCP-1, transmit 0.5/(1.0+0.5+0.6)=23.8% of service request to the SCP-2, and transmit 0.6/(1.0+0.5+0.6)=28.6% of service request to the SCP-3.

In some possible embodiments, to ensure load balance, service allocation may also be performed on one of the following five bases.
1. The first network function entity may use different SCP network elements for different messages of a user equipment (UE), for example, use the SCP-1 for a message A of the UE and use the SCP-2 for a message B of the UE.
2. The UE may establish different packet data unit (PDU) sessions, and different SCP network elements may use different PDU sessions. For example, the SCP-1 is used for a PDU session 1, and the SCP-2 is used for a PDU session 2.
3. Different SCP network elements may be used for different types of Internet Protocol (IP) addresses used by the UE. The SCP-1 is used when a type of an IP address used by the UE is IPv4, and the SCP-2 is used when a type of an IP address used by the UE is IPv6.
4. Different SCP network elements are used based on different service types of the UE. For example, the SCP-1 is used for short messages, the SCP-2 is used for security authentication, and the SCP-3 is used for mobility management.
5. Different SCP network elements are used for different data network names (DNNs) or different single network slice selection assistance information (S-NSSAI).

However, the foregoing cases are merely examples for description. Actually, this application is not limited to the listed cases. It is to be expressed that, when there are multiple available SCP network elements, the multiple SCP network elements may be used in multiple dimensions according to actual situations, to achieve relative load balance.

The foregoing manners are merely described for performing load balance for service requests from one UE. Actually, the load balance may be alternatively performed in another dimension. In this case, the first network function entity selects a second SCP network element from the N second SCP network elements to provide a service for a connected terminal. For example, all service requests for UE1 are allocated to the SCP-1, all service requests for UE2 are allocated to the SCP-2, and all service requests for UE3 are allocated to the SCP-3.

In another scenario, the UE may be referred to as a terminal and is a device with a wireless transceiver function. The device may be deployed on the land, including an indoor or outdoor device, a handheld device, or an in-vehicle device; or may be deployed on the water (for example, on a steamship); or may be deployed in the air (for example, on an airplane, a balloon, or a satellite). The terminal may be a mobile phone, a tablet computer (Pad), a computer with a wireless transceiver function, a virtual reality (VR) terminal, an augmented reality (AR) terminal, a wireless terminal for industrial control, a wireless terminal for remote medical, a wireless terminal in a smart grid, a wireless terminal for transportation safety, a wireless terminal in a smart city, a wireless terminal in a smart home, or the like.

In step 203, the first network function entity adjusts, in a case that Q second SCP network elements in the N second SCP network elements are invalid, the service allocation according to load capacity information of each of (N-Q) second SCP network elements, where Q is an integer greater than 0 and less than N.

For example, if the SCP-1 is invalid, the first network function entity adjusts the service allocation between the SCP-2 and SCP-n. The SCP-1 may be a second SCP network element (1) in FIG. 6, the SCP-2 may be a second SCP network element (2) in FIG. 6, ..., and the SCP-n may be a second SCP network element (n) in FIG. 6.

In the solution provided in this embodiment of this application, in a case that there are multiple available second SCP network elements, load balance may be performed according to load capacities of the second SCP network elements, thereby improving the service processing capability.

In the communication method provided in the embodiments of this application, the first network function entity may further notify the control function entity or the third network function entity of which SCP network elements are invalid. For example, the first network function entity transmits, to the control function entity or the third network function entity, a first notification message indicating that the first SCP network element or the second SCP network element is invalid, so that the control function entity timely updates, in response to the first notification message, information about whether recorded SCP network elements are invalid, to provide an accurate list of valid SCP network elements. In addition, a case that the third network function entity selects an invalid SCP network element is avoided.

The third network function entity may be a network function entity other than the first network function entity and the second network function entity.

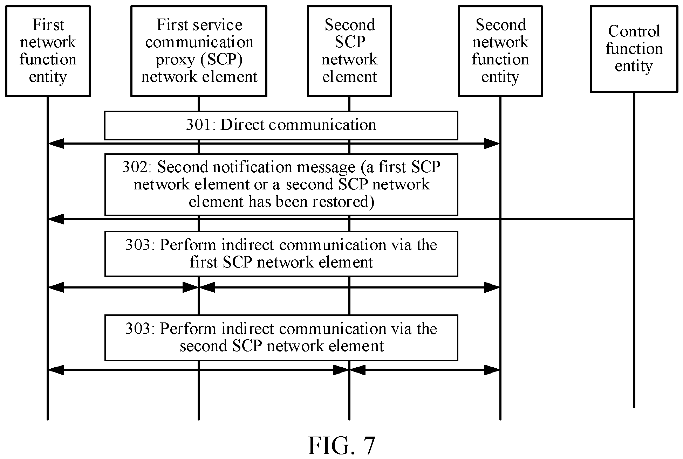

An invalid SCP network element may be further restored to be valid again. For the SCP network element restored to be valid, as shown in FIG. 7, the communication method provided in the embodiments of this application may further include the following steps 301 to 303.

In step 301, the first network function entity has returned to directly communicate with the second network function entity.

In step 302, the first network function entity receives a second notification message indicating that the first SCP network element is restored to be valid or the second SCP network element is restored to be valid.

In step 303, the first network function entity switches, in response to the second notification message, to indirectly communicate with the second network function entity via the first SCP network element or the second SCP network element.

In a case that the second notification message indicates that the first SCP network element is restored to be valid, the first network function entity switches to indirectly communicate with the second network function entity via the first SCP network element. In a case that the second notification message indicates that the second SCP network element is restored to be valid, the first network function entity switches to indirectly communicate with the second network function entity via the second SCP network element.

In this embodiment of this application, if the SCP network element is restored to be valid, the first network function entity may switch from direct communication to indirect communication, thereby further ensuring the reliability of a system while ensuring the service continuity.

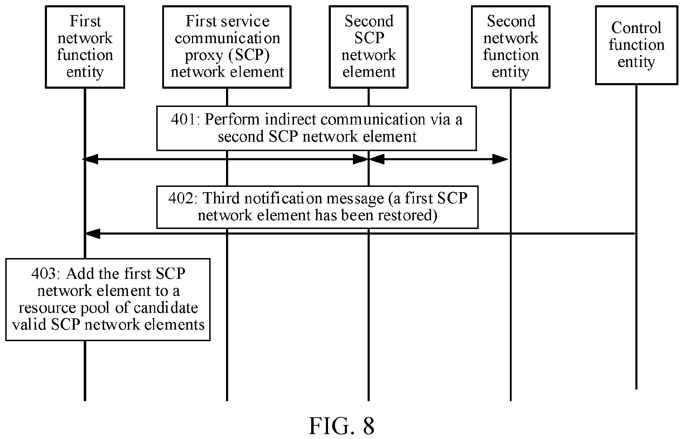

An invalid first SCP network element may be further restored to be valid again. For the first SCP network element restored to be valid, as shown in FIG. 8, the communication method provided in the embodiments of this application may further include the following steps 401 to 403.

In step 401, the first network function entity indirectly communicates with the second network function entity via the second SCP network element.

In step 402, the first network function entity receives a third notification message indicating that the first SCP network element is restored to be valid.

In step 403, the first network function entity adds the first SCP network element to a resource pool of candidate valid SCP network elements in response to the third notification message.

Regarding when the first SCP network element will be selected as a proxy between the first network function entity and the second network function entity again, reference may be made to the foregoing described solution. For example, when the first SCP network element and the second SCP network element perform load balance for service requests or when the second SCP network element is invalid and an SCP network element is to be selected from the resource pool of the valid SCP network elements, the first SCP network element may be selected again to provide an indirect communication service for the first network function entity and the second network function entity.

The network architectures and the communication method involved in the embodiments of this application are described above. A communication apparatus provided by the embodiments of this application is described below with reference to the drawings.

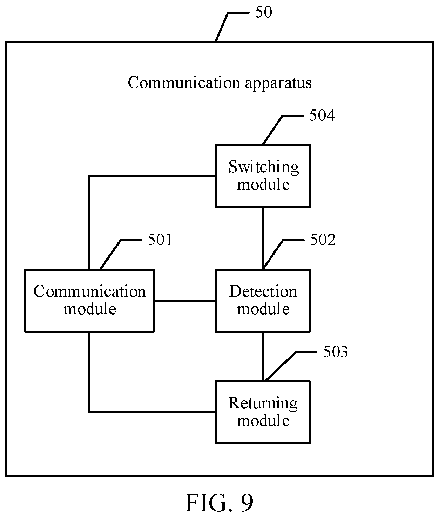

As shown in FIG. 9, a communication apparatus 50 provided in an embodiment of this application may include: a communication module 501, a detection module 502, a returning module 503, and a switching module 504. The communication module 501 is configured to indirectly communicate with a second network function entity via a first SCP network element. The detection module 502 is configured to detect a second SCP network element in a case that it is determined that the first SCP network element is invalid. The return module 503 is configured to return to directly communicate with the second network function entity in a case that it is determined that the first SCP network element is invalid. The switching module 504 is configured to switch from the first SCP network element to the second SCP network element in a case that the detection module detects that the second SCP network element is valid. The communication module 501 is further configured to indirectly communicate with the second network function entity via the second SCP network element that is switched to by the switching module. The return module 503 is further configured to return to directly communicate with the second network function entity in a case that the detection module detects that the second SCP network element is invalid.

In the embodiments of this application, in a case that the SCP network element used by the first network function entity to communicate with the second network function entity is invalid, another available SCP network element may be switched to or the first network function entity may return to directly communicate with the second network function entity. In this way, it can be ensured that the first network function entity can continually perform service communication with the second network function entity, thereby ensuring the service continuity and the reliability and availability of a system.

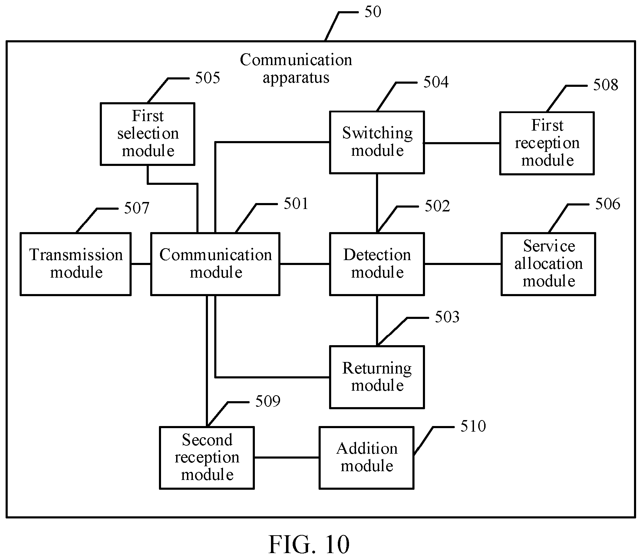

In a possible implementation, as shown in FIG. 10, the communication apparatus 50 may further include a first selection module 505. The first selection module 505 is configured to select a third SCP network element, and select, in a case that the third SCP network element is invalid during selecting the second network function entity for the first network function entity, the first SCP network element to establish a communication connection between the first network function entity and the second network function entity.

In a possible implementation, the detection module 502 is further configured to select N valid SCP network elements from configured M valid SCP network elements as the second SCP network elements, where M is an integer greater than 0, and N is an integer greater than 0 and less than or equal to M.

In a possible implementation, the detection module 502 may include: a first transmission unit and a first reception unit. The first transmission unit is configured to transmit a first query request to a control function entity. The first reception unit is configured to receive a first query response transmitted by the control function entity, the first query response includes information about M valid SCP network elements, M is an integer greater than 0. The first selection module is further configured to select N valid SCP network elements from the M valid SCP network elements as the second SCP network elements, N is an integer greater than 0 and less than or equal to M.

In a possible implementation, the detection module 502 may include: a second transmission unit and a second reception unit. The second transmission unit is configured to transmit a second query request to a control function entity. The second reception unit is configured to receive a second query response transmitted by the control function entity, the second query response is used for indicating absence of a valid SCP network element, the absence of a valid SCP network element represents that the second SCP network element is invalid.

Actually, the first transmission unit, the second transmission unit, the third transmission unit, the first reception unit, and the second reception unit are substantially the same, and each is a transmission unit or a reception unit.

In a possible implementation, the communication apparatus 50 further includes a service allocation module 506. The service allocation module 506 is configured to perform service allocation among the N second SCP network elements according to load capacity information of each of the N second SCP network elements.

In a possible implementation, the service allocation module 506 is further configured to adjust, in a case that Q second SCP network elements in the N second SCP network elements are invalid, the service allocation according to load capacity information of each of (N-Q) second SCP network elements, Q is an integer greater than 0 and less than N.

In a possible implementation, the communication apparatus further includes: a transmission module 507. The transmission module 507 is configured to transmit, to the control function entity or a third network function entity, a first notification message indicating that the first SCP network element or the second SCP network element is invalid.

In a possible implementation, the communication apparatus further includes a first reception module 508. The first reception module 508 is configured to receive, in a case that the first network function entity has returned to directly communicate with the second network entity, a second notification message indicating that the first SCP network element is restored to be valid or the second SCP network element is restored to be valid. The switching module 504 is further configured to switch, in response to the second notification message, to indirectly communicate with the second network function entity via the first SCP network element or the second SCP network element.

In a possible implementation, the communication apparatus further includes a second reception module 509 and an addition module 510. The second reception module 509 is configured to receive, in a case that the first network function entity communicates with the second network function entity via the second SCP network element, a third notification message indicating that the first SCP network element is restored to be valid. The addition module 510 is configured to add the first SCP network element to a resource pool of candidate valid SCP network elements in response to the third notification message.

The solutions provided in the embodiments of this application are described above mainly from the perspective of interaction between entities. It may be understood that, to implement the foregoing functions, the foregoing first network function entity includes corresponding hardware structures and/or software modules for performing the functions. A person skilled in the art is to be easily aware that, in combination with the functions described in the embodiments in this specification, this application can be implemented by hardware or a combination of hardware and computer software. Whether a function is performed by hardware or computer software driving hardware depends on particular applications and design constraints of the technical solutions. Those skilled in the art may use different methods to implement the described functions for each particular application, but such implementation is not to be considered beyond the scope of this application.

In terms of a physical apparatus, the first network function entity may be implemented by using one physical apparatus, or may be jointly implemented by using multiple physical apparatuses, or may be a logical function unit in a physical apparatus. This is not specifically limited in this embodiment of this application.

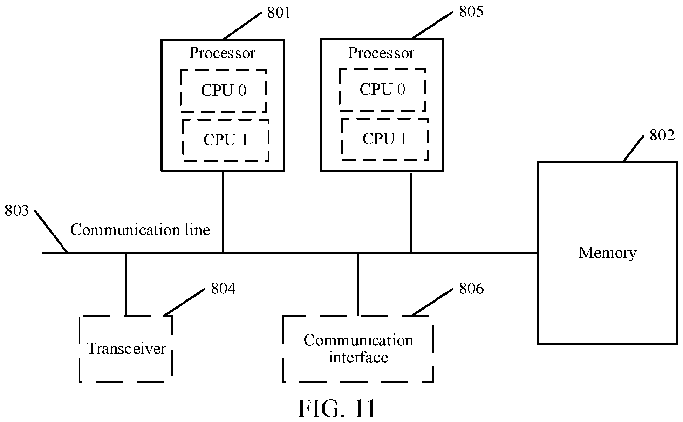

For example, the first network function entity may be implemented by the communication device in FIG. 11. FIG. 11 is a schematic structural diagram of hardware of a communication device according to an embodiment of this application. The communication device includes at least one processor 801, a memory 802, and a communication line 803. The communication device may further include at least one of a transceiver 804 and a communication interface 806.

The processor 801 may be a general-purpose central processing unit (CPU), a microprocessor, an application-specific integrated circuit (ASIC), or one or more integrated circuits configured to control execution of a program in implementing the solutions of this application.

The communication line 803 may include a route, to transmit information between the foregoing components.

The transceiver 804 is configured to communicate, by using any transceiving apparatus, with another device or a communication network such as the Ethernet, a radio access network (RAN), or a wireless local area network (WLAN). The transceiver 804 may alternatively be a transceiver circuit or a transceiver machine. In a case that the communication device is the first network function entity, the communication device may include the transceiver.

The communication device may further include the communication interface 806.

The memory 802 may be a read-only memory (ROM) or another type of static storage device capable of storing static information and instructions, a random access memory (RAM) or another type of dynamic storage device capable of storing information and instructions, or may be an electrically erasable programmable read-only memory (EEPROM), a compact disc read-only memory (CD-ROM), or other compact disc storage or optical disc storage (including a compressed optical disc, a laser disc, an optical disc, a digital universal optical disc, a blue-ray optical disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor 801 by using the communication line 803. The memory 802 may alternatively be integrated with the processor 801.

The memory 802 is configured to store computer executable instructions for executing the solutions of this application, and the processor 801 controls the execution. The processor 801 is configured to execute the computer executable instructions stored in the memory 802, to implement the communication method provided by the method embodiments of this application.

In a possible implementation, the computer executable instructions in this embodiment of this application may also be referred to as application codes. This is not specifically limited in this embodiment of this application.

During specific implementation, in an embodiment, the processor 801 may include one or more CPUs, for example, a CPU 0 and a CPU 1 in FIG. 11.

During specific implementation, in an embodiment, the communication device may include multiple processors, for example, a processor 801 and a processor 805 in FIG. 11. Each of these processors may be a single-core (single-CPU) processor, or may be a multi-core (multi-CPU) processor. The processor herein may be one or more devices or circuits, and/or a processing core configured to process data (for example, computer executable instructions).

In terms of the function unit, this application may perform function unit division for the control function entity and the first network function entity according to the foregoing method embodiments. For example, various function units may be obtained through division according to the corresponding functions, or two or more functions may be integrated into one function unit. The integrated function unit may be implemented in the form of hardware, or may be implemented in the form of a software function unit.

The first reception module 509, the second reception module 510, the transmission module 508, and the communication module 501 all may be implemented by using the transceiver 804. Further, the communication module 501 may be implemented by using the communication interface 806. The detection module 502 may also be implemented by using the transceiver 804.

The switching module 504, the returning module 503, the addition module 511, the first selection module 505, and the service allocation module 506 may be all implemented by using the processor 801 or the processor 805.

All or some of the foregoing embodiments may be implemented by using software, hardware, firmware, or any combination thereof. When software is used for implementation, implementation may be entirely or partially performed in the form of a computer program product.

The computer program product includes one or more computer instructions. When the computer program instructions are loaded and executed on a computer, all or some of the processes or functions according to the embodiments of this application are produced. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, a computer, server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a server or a data center in which one or more usable mediums are integrated. The usable medium may be a magnetic medium (for example, a soft disk, a hard disk, or a magnetic tape), an optical medium (for example, a DVD), a semiconductor medium (for example, a solid state disk (SSD)), or the like. A person of ordinary skill in the art may understand that all or some of the steps of the methods in the embodiments may be implemented by a program instructing relevant hardware. The program may be stored in a computer-readable storage medium. The storage medium may include: a ROM, a RAM, a magnetic disk, or an optical disc.

The communication method, the communication apparatus, and the network function entities provided in the embodiments of this application are described above in detail. Although the principles and implementations of this application are described by using specific examples in this specification, the descriptions of the foregoing embodiments are merely intended to help understand the method and the core idea of this application. Meanwhile, a person skilled in the art may make modifications to the specific implementations and application range. Based on the above, the content of this specification shall not be construed as a limitation to this application. The scope is defined by the appended claims.

## Claims

1. A communication method, comprising:
communicating (101), by a first network function entity, indirectly with a second network function entity via a first service communication proxy, SCP, network element;
in a case that the first network function entity determines that the first SCP network element is invalid, detecting (102), by the first network function entity, a second SCP network element or returning (103), by the first network function entity, to directly communicate with the second network function entity;
in a case that the first network function entity determines that the second SCP network element is valid, switching (104), by the first network function entity, from the first SCP network element to the second SCP network element, to indirectly communicate with the second network function entity via the second SCP network element; and
in a case that the first network function entity determines that the second SCP network element is invalid, returning (105), by the first network function entity, to directly communicate with the second network function entity,
**characterized in that**
the communication method further comprises:
transmitting, by the first network function entity to a control function entity or a third network function entity, a first notification message indicating that the first SCP network element or the second SCP network element is invalid.

2. The communication method according to claim 1, wherein before the communicating, by a first network function entity, indirectly with a second network function entity via a first service communication proxy, SCP, network element, the method further comprises:
selecting, by the first network function entity, a third SCP network element; and
selecting, by the first network function entity in a case that the first network function entity determines that the third SCP network element is invalid during selecting the second network function entity for the first network function entity, the first SCP network element to establish a communication connection between the first network function entity and the second network function entity.

3. The communication method according to claim 1, wherein the detecting, by the first network function entity, a second SCP network element comprises:
selecting (201), by the first network function entity, N valid SCP network elements from configured M valid SCP network elements as second SCP network elements, M being an integer greater than 0, and N being an integer greater than 0 and less than or equal to M.

4. The communication method according to claim 1, wherein the detecting, by the first network function entity, a second SCP network element comprises:
transmitting, by the first network function entity, a first query request to a control function entity;
receiving, by the first network function entity, a first query response transmitted by the control function entity, the first query response comprising information about M valid SCP network elements, M being an integer greater than 0; and
selecting, by the first network function entity, N valid SCP network elements from the M valid SCP network elements as second SCP network elements, N being an integer greater than 0 and less than or equal to M.

5. The communication method according to claim 1, wherein the detecting, by the first network function entity, a second SCP network element comprises:
transmitting, by the first network function entity, a second query request to a control function entity; and
receiving, by the first network function entity, a second query response transmitted by the control function entity, the second query response being used for indicating absence of a valid SCP network element, the absence of a valid SCP network element representing that the second SCP network element is invalid.

6. The communication method according to claim 3 or 4, wherein in a case that N is greater than 1, the method further comprises:
performing (202), by the first network function entity, service allocation among the N second SCP network elements according to load capacity information of each of the N second SCP network elements.

7. The communication method according to claim 3 or 4, wherein in a case that N is greater than 1, the method further comprises:
selecting, by the first network function entity, a second SCP network element from the N second SCP network elements to provide a service for a connected terminal.

8. The communication method according to any one of claims 1 to 5, further comprising:
receiving (302), by the first network function entity in a case that the first network function entity has returned to directly communicate with the second network entity, a second notification message indicating that the first SCP network element is restored to be valid or the second SCP network element is restored to be valid; and
switching (303), by the first network function entity in response to the second notification message, to indirectly communicate with the second network function entity via the first SCP network element or the second SCP network element.

9. The communication method according to any one of claims 1 to 5, further comprising:
receiving (402), by the first network function entity in a case that the first network function entity communicates with the second network function entity via the second SCP network element, a third notification message indicating that the first SCP network element is restored to be valid; and
adding (403), by the first network function entity, the first SCP network element to a resource pool of candidate valid SCP network elements in response to the third notification message.

10. The communication method according to any one of claims 1 to 5, wherein
the first network function entity is a network function, NF, network element or an NF service module; and
the second network function entity is an NF network element or an NF service module.

11. A network function entity, comprising:
a communication module (501), configured to indirectly communicate with a second network function entity via a first service communication proxy, SCP, network element;
a detection module (502), configured to detect a second SCP network element in a case that it is determined that the first SCP network element is invalid;
a returning module (503), configured to return to directly communicate with the second network function entity in a case that it is determined that the first SCP network element is invalid; and
a switching module (504), configured to switch from the first SCP network element to the second SCP network element in a case that the detection module (502) detects that the second SCP network element is valid, wherein
the communication module (501) is further configured to indirectly communicate with the second network function entity via the second SCP network element that is switched to by the switching module (504); and
the returning module (503) is further configured to return to directly communicate with the second network function entity in a case that the detection module (502) detects that the second SCP network element is invalid,
**characterized in that**
the network function entity further comprises a transmission module, configured to transmit, to the control function entity or a third network function entity, a first notification message indicating that the first SCP network element or the second SCP network element is invalid.

12. A computer-readable storage medium, comprising instructions, the instructions, when run by a network function entity, causing the network function entity to perform the communication method according to any one of claims 1 to 10.

13. A computer program product, which, when executed by a network function entity, causes the network function entity to perform the communication method according to any one of claims 1 to 10.

## Patentansprüche

1. Kommunikationsverfahren, umfassend:
indirektes Kommunizieren (101) durch eine erste Netzwerkfunktionseinheit mit einer zweiten Netzwerkfunktionseinheit über ein erstes Dienstkommunikationsproxy-, SCP, Netzwerkelement;
falls die erste Netzwerkfunktionseinheit bestimmt, dass das erste SCP-Netzwerkelement ungültig ist, Detektieren (102), durch die erste Netzwerkfunktionseinheit, eines zweiten SCP-Netzwerkelements oder Zurückkehren (103) durch die erste Netzwerkfunktionseinheit zur direkten Kommunikation mit der zweiten Netzwerkfunktionseinheit;
falls die erste Netzwerkfunktionseinheit bestimmt, dass das zweite SCP-Netzwerkelement gültig ist, Umschalten (104) durch die erste Netzwerkfunktionseinheit vom ersten SCP-Netzwerkelement zum zweiten SCP-Netzwerkelement, um indirekt mit der zweiten Netzwerkfunktionseinheit über das zweite SCP-Netzwerkelement zu kommunizieren; und
falls die erste Netzwerkfunktionseinheit bestimmt, dass das zweite SCP-Netzwerkelement ungültig ist, Zurückkehren (105) durch die erste Netzwerkfunktionseinheit zur direkten Kommunikation mit der zweiten Netzwerkfunktionseinheit,
**dadurch gekennzeichnet, dass**
das Kommunikationsverfahren ferner umfasst:
Übertragen, durch die erste Netzwerkfunktionseinheit an eine Steuerfunktionseinheit oder eine dritte Netzwerkfunktionseinheit, einer ersten Mitteilungsnachricht, die angibt, dass das erste SCP-Netzwerkelement oder das zweite SCP-Netzwerkelement ungültig ist.

2. Kommunikationsverfahren nach Anspruch 1, wobei vor dem indirekten Kommunizieren durch eine erste Netzwerkfunktionseinheit mit einer zweiten Netzwerkfunktionseinheit über ein erstes Dienstkommunikationsproxy-, SCP, Netzwerkelement das Verfahren ferner umfasst:
Auswählen, durch die erste Netzwerkfunktionseinheit, eines dritten SCP-Netzwerkelements; und
falls die erste Netzwerkfunktionseinheit bestimmt, dass das dritte SCP-Netzwerkelement während der Auswahl der zweiten Netzwerkfunktionseinheit für die erste Netzwerkfunktionseinheit ungültig ist, Auswählen des ersten SCP-Netzwerkelements durch die erste Netzwerkfunktionseinheit, um eine Kommunikationsverbindung zwischen der ersten Netzwerkfunktionseinheit und der zweiten Netzwerkfunktionseinheit herzustellen.

3. Kommunikationsverfahren nach Anspruch 1, wobei das Detektieren eines zweiten SCP-Netzwerkelements durch die erste Netzwerkfunktionseinheit umfasst:
Auswählen (201), durch die erste Netzwerkfunktionseinheit, von N gültigen SCP-Netzwerkelementen aus konfigurierten M gültigen SCP-Netzwerkelementen als zweite SCP-Netzwerkelemente, wobei M eine ganze Zahl größer als 0 ist und N eine ganze Zahl größer als 0 und kleiner oder gleich M ist.

4. Kommunikationsverfahren nach Anspruch 1, wobei das Detektieren eines zweiten SCP-Netzwerkelements durch die erste Netzwerkfunktionseinheit umfasst:
Übertragen einer ersten Abfrageanforderung durch die erste Netzwerkfunktionseinheit an eine Steuerfunktionseinheit;
Empfangen, durch die erste Netzwerkfunktionseinheit, einer durch die Steuerfunktionseinheit übertragenen ersten Abfrageantwort, wobei die erste Abfrageantwort Informationen über M gültige SCP-Netzwerkelemente umfasst, wobei M eine ganze Zahl größer als 0 ist; und
Auswählen, durch die erste Netzwerkfunktionseinheit, von N gültigen SCP-Netzwerkelementen aus den M gültigen SCP-Netzwerkelementen als zweite SCP-Netzwerkelemente, wobei N eine ganze Zahl größer als 0 und kleiner oder gleich M ist.

5. Kommunikationsverfahren nach Anspruch 1, wobei das Detektieren eines zweiten SCP-Netzwerkelements durch die erste Netzwerkfunktionseinheit umfasst:
Übertragen einer zweiten Abfrageanforderung durch die erste Netzwerkfunktionseinheit an eine Steuerfunktionseinheit; und
Empfangen, durch die erste Netzwerkfunktionseinheit, einer durch die Steuerfunktionseinheit übertragenen zweiten Abfrageantwort, wobei die zweite Abfrageantwort dazu verwendet wird, das Fehlen eines gültigen SCP-Netzwerkelements anzuzeigen, wobei das Fehlen eines gültigen SCP-Netzwerkelements darstellt, dass das zweite SCP-Netzwerkelement ungültig ist.

6. Kommunikationsverfahren nach Anspruch 3 oder 4, wobei, falls N größer als 1 ist, das Verfahren ferner umfasst:
Durchführen (202), durch die erste Netzwerkfunktionseinheit, einer Dienstzuweisung unter den N zweiten SCP-Netzwerkelementen gemäß Lastkapazitätsinformationen jedes der N zweiten SCP-Netzwerkelemente.

7. Kommunikationsverfahren nach Anspruch 3 oder 4, wobei, falls N größer als 1 ist, das Verfahren ferner umfasst:
Auswählen, durch die erste Netzwerkfunktionseinheit, eines zweiten SCP-Netzwerkelements aus den N zweiten SCP-Netzwerkelementen, um einen Dienst für ein verbundenes Endgerät bereitzustellen.

8. Kommunikationsverfahren nach einem der Ansprüche 1 bis 5, ferner umfassend:
Empfangen (302), durch die erste Netzwerkfunktionseinheit, falls die erste Netzwerkfunktionseinheit zur direkten Kommunikation mit der zweiten Netzwerkeinheit zurückgekehrt ist, einer zweiten Mitteilungsnachricht, die angibt, dass das erste SCP-Netzwerkelement wiederhergestellt und gültig ist oder das zweite SCP-Netzwerkelement wiederhergestellt und gültig ist; und
Umschalten (303), durch die erste Netzwerkfunktionseinheit als Reaktion auf die zweite Mitteilungsnachricht, zur indirekten Kommunikation mit der zweiten Netzwerkfunktionseinheit über das erste SCP-Netzwerkelement oder das zweite SCP-Netzwerkelement.

9. Kommunikationsverfahren nach einem der Ansprüche 1 bis 5, ferner umfassend:
Empfangen (402), durch die erste Netzwerkfunktionseinheit, falls die erste Netzwerkfunktionseinheit mit der zweiten Netzwerkfunktionseinheit über das zweite SCP-Netzwerkelement kommuniziert, einer dritten Mitteilungsnachricht, die angibt, dass das erste SCP-Netzwerkelement wiederhergestellt und gültig ist; und
Hinzufügen (403), durch die erste Netzwerkfunktionseinheit, des ersten SCP-Netzwerkelements zu einem Ressourcenpool von Kandidaten gültiger SCP-Netzwerkelemente als Reaktion auf die dritte Mitteilungsnachricht.

10. Kommunikationsverfahren nach einem der Ansprüche 1 bis 5, wobei
die erste Netzwerkfunktionseinheit ein Netzwerkfunktions-, NF, Netzwerkelement oder ein NF-Dienstmodul ist; und
die zweite Netzwerkfunktionseinheit ein NF-Netzwerkelement oder ein NF-Dienstmodul ist.

11. Netzwerkfunktionseinheit, umfassend:
ein Kommunikationsmodul (501), das dazu ausgelegt ist, indirekt mit einer zweiten Netzwerkfunktionseinheit über ein erstes Dienstkommunikationsproxy-, SCP, Netzwerkelement zu kommunizieren;
ein Detektionsmodul (502), das dazu ausgelegt ist, ein zweites SCP-Netzwerkelement zu detektieren, falls bestimmt wird, dass das erste SCP-Netzwerkelement ungültig ist;
ein Rückkehrmodul (503), das dazu ausgelegt ist, zur direkten Kommunikation mit der zweiten Netzwerkfunktionseinheit zurückzukehren, falls bestimmt wird, dass das erste SCP-Netzwerkelement ungültig ist; und
ein Umschaltmodul (504), das dazu ausgelegt ist, vom ersten SCP-Netzwerkelement zum zweiten SCP-Netzwerkelement umzuschalten, falls das Detektionsmodul (502) detektiert, dass das zweite SCP-Netzwerkelement gültig ist, wobei
das Kommunikationsmodul (501) ferner dazu ausgelegt ist, indirekt mit der zweiten Netzwerkfunktionseinheit über das zweite SCP-Netzwerkelement zu kommunizieren, zu dem durch das Umschaltmodul (504) umgeschaltet wurde; und
das Rückkehrmodul (503) ferner dazu ausgelegt ist, zur direkten Kommunikation mit der zweiten Netzwerkfunktionseinheit zurückzukehren, falls das Detektionsmodul (502) detektiert, dass das zweite SCP-Netzwerkelement ungültig ist,
**dadurch gekennzeichnet, dass**
die Netzwerkfunktionseinheit ferner ein Übertragungsmodul umfasst, das dazu ausgelegt ist, an die Steuerfunktionseinheit oder eine dritte Netzwerkfunktionseinheit eine erste Mitteilungsnachricht zu übertragen, die angibt, dass das erste SCP-Netzwerkelement oder das zweite SCP-Netzwerkelement ungültig ist.

12. Computerlesbares Speichermedium, umfassend Anweisungen, wobei die Anweisungen, wenn sie durch eine Netzwerkfunktionseinheit ausgeführt werden, die Netzwerkfunktionseinheit veranlassen, das Kommunikationsverfahren nach einem der Ansprüche 1 bis 10 durchzuführen.

13. Computerprogrammprodukt, das, wenn es durch eine Netzwerkfunktionseinheit ausgeführt wird, die Netzwerkfunktionseinheit veranlasst, das Kommunikationsverfahren nach einem der Ansprüche 1 bis 10 durchzuführen.

## Revendications

1. Procédé de communication, comprenant :
la communication (101), par une première entité de fonction réseau, indirecte avec une deuxième entité de fonction réseau par l'intermédiaire d'un premier élément de réseau mandataire de communication de service, « Service Communication Proxy » SCP ;
dans un cas où la première entité de fonction réseau détermine que le premier élément de réseau SCP est invalide, la détection (102), par la première entité de fonction réseau, d'un deuxième élément de réseau SCP, ou le retour (103), par la première entité de fonction réseau, à une communication directe avec la deuxième entité de fonction réseau ;
dans un cas où la première entité de fonction réseau détermine que le deuxième élément de réseau SCP est valide, la commutation (104), par la première entité de fonction réseau, depuis le premier élément de réseau SCP, au deuxième élément de réseau SCP, pour communiquer indirectement avec la deuxième entité de fonction réseau par l'intermédiaire du deuxième élément de réseau SCP ; et
dans un cas où la première entité de fonction réseau détermine que le deuxième élément de réseau SCP est invalide, le retour (105), par la première entité de fonction réseau, à une communication directe avec la deuxième entité de fonction réseau,
**caractérisé en ce que**
le procédé de communication comprend en outre :
la transmission, par la première entité de fonction réseau, à une entité de fonction commande ou une troisième entité de fonction réseau, d'un premier message de notification indiquant que le premier élément de réseau SCP ou le deuxième élément de réseau SCP est invalide.

2. Procédé de communication selon la revendication 1, dans lequel avant la communication, par une première entité de fonction réseau, indirecte avec une deuxième entité de fonction réseau par l'intermédiaire d'un premier élément de réseau mandataire de communication de service SCP, le procédé comprend en outre :
la sélection, par la première entité de fonction réseau, d'un troisième élément de réseau SCP ; et
la sélection, par la première entité de fonction réseau, dans un cas où la première entité de fonction réseau détermine que le troisième élément de réseau SCP est invalide durant la sélection de la deuxième entité de fonction réseau pour la première entité de fonction réseau, du premier élément de réseau SCP pour établir une connexion de communication entre la première entité de fonction réseau et la deuxième entité de fonction réseau.

3. Procédé de communication selon la revendication 1, dans lequel la détection, par la première entité de fonction réseau, d'un deuxième élément de réseau SCP comprend :
la sélection (201), par la première entité de fonction réseau, de N éléments de réseau SCP valides, à partir de M éléments de réseau SCP valides configurés, en tant que deuxièmes éléments de réseau SCP, M étant un nombre entier supérieur à 0, et N étant un nombre entier supérieur à 0 et inférieur ou égal à M.

4. Procédé de communication selon la revendication 1, dans lequel la détection, par la première entité de fonction réseau, d'un deuxième élément de réseau SCP comprend :
la transmission, par la première entité de fonction réseau, d'une première demande d'interrogation à une entité de fonction commande ;
la réception, par la première entité de fonction réseau, d'une première réponse d'interrogation transmise par l'entité de fonction commande, la première réponse d'interrogation comprenant des informations concernant M éléments de réseau SCP valides, M étant un nombre entier supérieur à 0 ; et
la sélection, par la première entité de fonction réseau, de N éléments de réseau SCP valides, à partir des M éléments de réseau SCP valides, en tant que deuxièmes éléments de réseau SCP, N étant un nombre entier supérieur à 0 et inférieur ou égal à M.

5. Procédé de communication selon la revendication 1, dans lequel la détection, par la première entité de fonction réseau, d'un deuxième élément de réseau SCP comprend :
la transmission, par la première entité de fonction réseau, d'une seconde demande d'interrogation à une entité de fonction commande ; et
la réception, par la première entité de fonction réseau, d'une seconde réponse d'interrogation transmise par l'entité de fonction commande, la seconde réponse d'interrogation étant utilisée pour indiquer l'absence d'un élément de réseau SCP valide, l'absence d'un élément de réseau SCP valide représentant que le deuxième élément de réseau SCP est invalide.

6. Procédé de communication selon la revendication 3 ou 4, dans lequel, dans un cas où N est supérieur à 1, le procédé comprend en outre :
la réalisation (202), par la première entité de fonction réseau, d'une attribution de service parmi les N deuxièmes éléments de réseau SCP selon des informations de capacité de charge de chacun des N deuxièmes éléments de réseau SCP.

7. Procédé de communication selon la revendication 3 ou 4, dans lequel, dans un cas où N est supérieur à 1, le procédé comprend en outre :
la sélection, par la première entité de fonction réseau, d'un deuxième élément de réseau SCP, à partir des N deuxièmes éléments de réseau SCP, pour fournir un service pour un terminal connecté.

8. Procédé de communication selon l'une quelconque des revendications 1 à 5, comprenant en outre :
la réception (302), par la première entité de fonction réseau, dans un cas où la première entité de fonction réseau est retourné à une communication directe avec la deuxième entité de réseau, d'un deuxième message de notification indiquant que le premier élément de réseau SCP est rétabli à l'état valide ou le deuxième élément de réseau SCP est rétabli à l'état valide ; et
la commutation (303), par la première entité de fonction réseau, en réponse au deuxième message de notification, pour communiquer indirectement avec la deuxième entité de fonction réseau par l'intermédiaire du premier élément de réseau SCP ou du deuxième élément de réseau SCP.

9. Procédé de communication selon l'une quelconque des revendications 1 à 5, comprenant en outre :
la réception (402), par la première entité de fonction réseau, dans un cas où la première entité de fonction réseau communique avec la deuxième entité de fonction réseau par l'intermédiaire du deuxième élément de réseau SCP, d'un troisième message de notification indiquant que le premier élément de réseau SCP est rétabli à l'état valide ; et
l'ajout (403), par la première entité de fonction réseau, du premier élément de réseau SCP à un groupe de ressources d'éléments de réseau SCP valides candidats, en réponse au troisième message de notification.

10. Procédé de communication selon l'une quelconque des revendications 1 à 5, dans lequel
la première entité de fonction réseau est un élément de réseau de fonction réseau, « Network Function » NF, ou un module de service NF ; et
la deuxième entité de fonction réseau est un élément de réseau NF ou un module de service NF.

11. Entité de fonction réseau, comprenant :
un module de communication (501), configuré pour communiquer indirectement avec une deuxième entité de fonction réseau par l'intermédiaire d'un premier élément de réseau mandataire de communication de service, « Service Communication Proxy » SCP ;
un module de détection (502), configuré pour détecter un deuxième élément de réseau SCP, dans un cas où il est déterminé que le premier élément de réseau SCP est invalide ;
un module de retour (503), configuré pour retourner à une communication directe avec la deuxième entité de fonction réseau, dans un cas où il est déterminé que le premier élément de réseau SCP est invalide ; et
un module de commutation (504), configuré pour commuter, depuis le premier élément de réseau SCP, au deuxième élément de réseau SCP, dans un cas où le module de détection (502) détecte que le deuxième élément de réseau SCP est valide, dans laquelle
le module de communication (501) est en outre configuré pour communiquer indirectement avec la deuxième entité de fonction réseau par l'intermédiaire du deuxième élément de réseau SCP auquel commute le module de commutation (504) ; et
le module de retour (503) est en outre configuré pour retourner à une communication directe avec la deuxième entité de fonction réseau, dans un cas où le module de détection (502) détecte que le deuxième élément de réseau SCP est invalide,
**caractérisé en ce que**
l'entité de fonction réseau comprend en outre un module de transmission, configuré pour transmettre, à l'entité de fonction commande ou à une troisième entité de fonction réseau, un premier message de notification indiquant que le premier élément de réseau SCP ou le deuxième élément de réseau SCP est invalide.

12. Support de stockage lisible par ordinateur, comprenant des instructions, les instructions, lorsqu'elles sont exploitées par une entité de fonction réseau, amenant l'entité de fonction réseau à réaliser le procédé de communication selon l'une quelconque des revendications 1 à 10.

13. Produit programme d'ordinateur, qui, lorsqu'il est exécuté par une entité de fonction réseau, amène l'entité de fonction réseau à réaliser le procédé de communication selon l'une quelconque des revendications 1 à 10.
